# EUROPEAN PATENT APPLICATION

(11) **EP 0 682 073 A2**
(43) Date of publication of application: **15.11.1995**
(21) Application number: 95107168.7
(22) Date of filing: 11.05.1995
(51) Int. Cl.: C08L 23/02, C08K 5/04

(54) **Polyolefin stabilization**

(30) Priority: 12.05.1994 US 241538
(71) Applicant: PHILLIPS PETROLEUM COMPANY, Bartlesville Oklahoma 74004 (US)
(72) Inventor: Willcox, Kenneth W., Bartlesville, Oklahoma 74006 (US)
(74) Representative: Dost, Wolfgang, Dr. rer.nat., Dipl.-Chem.

(57) **Abstract**

Stabilized compositions comprising a polyolefin, ascorbic acid and one or more tocopherols, and processes to prepare said compositions, are provided. These compositions have improved thermal oxidative stability.

## Description

### BACKGROUND OF THE INVENTION

This invention relates to the stabilization and thermal oxidative stabilization of homopolymers and copolymers of olefins.

It is known in the art that various additives, such as, for example, antioxidants, can be added to polyolefins to improve thermal oxidative stability. Additionally, polyolefins, or plastics, are becoming more and more prevalent in applications for use as containers for digestible items, such as food. In the past several years, the general public has developed an aversion to "non-natural" additives, or compounds that can be seen as "chemicals", and the perceived use of excess, non-required additives, components or ingredients. The prevalence of these attitudes can be seen in the rise in foods that are "organically" grown, i.e., under organic gardening conditions, "natural" foods, and advertisements that claim foods are "all natural" or have "no preservatives" added.

### SUMMARY OF THE INVENTION

Therefore, it is an object of this invention to provide homopolymer and copolymer compositions with improved stabilization properties.

It is another object of this invention to provide homopolymer and copolymer compositions with improved oxidative stability properties.

It is another object of this invention to provide homopolymers and copolymers which have been stabilized with antioxidants which consumers view as non-detrimental, or even beneficial stabilizers.

In accordance with the present invention, Vitamin C and Vitamin E are added to homopolymers and copolymers of olefins in amounts sufficient to improve the thermal oxidative stability.

### DESCRIPTION OF THE PREFERRED EMBODIMENTS

### Polymers

Olefin polymers useful in this invention can be any olefin homopolymer or copolymer. As used in this disclosure, the terms "polyolefin" and "polymer" broadly includes both olefin homopolymers and copolymers of one or more olefins. Exemplary polyolefins include, but are not limited to, polyolefins produced from olefins having from about 2 to about 8 carbon atoms per molecule. Specific, exemplary polyolefins include, but are not limited to, polyethylene(s), polypropylene(s), poly(4-methyl-1-pentene)(s) and mixtures thereof. The preferred polyolefins are polyethylene and polypropylene, with polyethylene being most preferred, due to relatively simple post-production processing conditions and extensive use in food container applications.

Polyolefins can also be produced by copolymerizing an olefin with one or more higher alpha-olefin comonomers. A comonomer usually is present in the polymerisation reactor in a small amount, i.e., an amount sufficient to maintain polymer density of less than about 0.94 grams/cubic centimeter (g/cc). Usually, up to about 5 mole percent comonomer can be present in the total olefin monomer mixture. For example, polyethylene production can use ethylene as the monomer and a comonomer, preferably, an alpha-olefin having about 3 to about 8 carbon atoms per molecule. Examples of comonomers useful for polymerization with ethylene include, but are not limited to, propylene, 1-butene, 4-methyl-1-pentene, 1-hexene, and mixtures thereof. The presently preferred comonomer for use with ethylene monomer is 1-hexene, which produces butyl branches, to produce a polymer with the most presently preferred properties.

Propylene polymers useful in this invention can be any crystalline or semi-crystalline polypropylene, such as, for example, as described in U.S. Patent 4,376,851 (Hogan and Banks), which is herein incorporated by reference. A propylene polymer can be produced according to any method known in the art.

Polyolefins useful in this invention can be produced by any method known in the art, using any polymerization catalyst system known in the art. Generally, polymerization catalysts systems are considered inorganic oxide supported chromium catalyst systems (also known as "Phillips catalysts"); transition metal halides and an organometallic compound (also known as "Ziegler-Natta catalysts"); or metallocene polymerization catalyst systems, wherein a transition metal is "sandwiched" between two or more organic compounds (also referred to as "metallocenes").

Commercially available chromium catalyst systems typically comprise chromium, at least a portion of which is in the hexavalent state, supported on an inorganic oxide; optionally, the supported chromium polymerization catalyst system can further comprise a metal alkyl co-catalyst. Exemplary chromium catalyst systems include, but are not limited to those disclosed in U.S. Patents 3,887,494; 3,900,457; 4,053,436; 4,151,122; 4,294,724; 4,392,990; and 4,405,501, herein incorporated by reference. One method of polyolefin production, especially useful for polyethylene production, uses inorganic oxide supported chromium-oxide catalyst systems under slurry, or particle form, polymerization conditions wherein the reactor temperature is usually kept below the temperature at which the polymer goes into solution. Such polymerization techniques are well known in the art and are disclosed, for instance, in Norwood, U.S. Pat. No. 3,248,179, the disclosure of which is herein incorporated by reference.

Commercially available Ziegler-Natta catalyst systems typically comprise complexes of transition metal halides, such as halides of titanium, zirconium, and/or vanadium, with organometallic compounds, such as aluminum alkyls. Exemplary Ziegler-Natta catalysts include, but are not limited to, those disclosed in U.S. Patents 4,394,291; 4,326,988; and 4,347,158, herein incorporated by reference. Methods of polyolefin production which use Ziegler-Natta catalysts usually have relatively mild polymerization reaction conditions, such as low temperatures and low pressures.

### Stabilization

As used in this disclosure, the stability of a polymer is an indication, or measure, of how polymers are effected by external forces, such as, for example, light, heat and oxidizers, acting on or reacting with a polymer. Stability, in other words, is an indication of changes occurring in and/or to the polymer. It should be recognized, however, that the polymers of this invention can contain additional components which do not adversely affect, and can even enhance, the properties of the polymer, such as, for example, other stabilizers, pigments, dyes, processing aids, inert fillers, binders, cross-linking agents, neutralizing agents, and combinations of two or more thereof.

The antioxidant stabilization package useful to improve the thermal oxidative stability of olefin polymers in this invention comprises ascorbic acid (C₆H₈O₆), commonly known as, and hereinafter also referred to as Vitamin C, and tocopherols, commonly known as, and hereinafter also referred to as Vitamin E, such as, for example, α-tocopherol (C₂₉H₅₀0₂). Both Vitamin C and Vitamin E can be present in any amount sufficient to improve the thermal oxidative stability of the polyolefin. These two compounds can be added as antioxidants which can improve thermal, light, and oxidation stability of the polymer.

Any type, or isomer, of ascorbic acid can be used in this invention. Both L-ascorbic acid and D-ascorbic acid are commercially available. D-ascorbic acid is also commonly known as D-xyloascorbic acid and D-threo-hex-2-enonic acid γ-lactone; D-araboascorbic acid is also known as erythorbic acid, D-erthro-hex-2-enonic acid γ-lactone; and L-ascorbic acid is also known as L-xyloascorbic acid and L-threo-hex-2-enonic acid γ-lactone.

Any type of tocopherol can be utilized in this invention. Exemplary tocopherols include, but are not limited to, four naturally occurring compounds possessing Vitamin E activity and four other analogous compounds. The four naturally occurring compounds are methyl derivatives of tocol (2-methyl-2-(4',8',12'-trimethyltridecyl)-6-chromonol) and include α-tocopherol (5,7,8-trimethyltocol), β-tocopherol (5,8-dimethyltocol), γ-tocopherol (7,8-dimethyltocol), and δ-tocopherol (8-methyltocol), and derivatives of one or more thereof, including both the D (right) and L (left) optically active isomers. Exemplary derivatives include, but are not limited to D-α-tocopherol acetate, DL-α-tocopherol acetate, D-α-tocopherol acid succinate, D-α-tocopherol polyethylene glycol 1000 succinate, D-α-tocopherol quinone, and mixtures thereof. The four analogous compounds are methyl derivatives of tocotrienol (2-methyl-2-(4',8',12'-trimethyltrideca-3',7',11'-trienyl)-6-chromonol and contain three unsaturated bonds in the side chain.

Generally, the entire antioxidant stabilizer package is present in the polymer within range of up to about 1,000 milligrams/kilogram (mg/kg or ppm), preferably within a range of about 10 to about 1,000 mg/kg. Most preferably, the total antioxidant stabilizer package is present in the final polymer composition within a range of 50 to 500 mg/kg, for best polymer stabilization. Any additional amounts of stabilizer do not significantly improve the oxidative stability of the polymer. Insufficient amounts of stabilizer do not sufficiently improve the stability of the polymer.

Generally, the amount of ascorbic acid present in the final resultant polymer composition is within a range of about 1 mg/kg to about 1000 mg/kg, preferably within a range of about 5 mg/kg to about 500 mg/kg. Most preferably, the amount of ascorbic acid present in the final polymer composition is within a range of 10 mg/kg to 250 mg/kg in order to maximize and maintain thermal oxidative stability.

The amount of α-tocopherol present in the final resultant polymer composition is generally up to about 1000 mg/kg, and preferably within a range of about 5 mg/kg to about 500 mg/kg. Preferably, the amount of tocopherol in the final polymer composition is within range of 10 mg/kg to 250 mg/kg. Vitamin E can impart color to the resultant polymer and high levels can be unacceptable to a customer. Furthermore, the preferred ranges provide a synergistic effect in stabilizing a polyolefin against thermal oxidation.

The antioxidant package used in this invention can be added to the polymer in accordance with any method known in the art. Exemplary methods to combine an antioxidant and a polymer include, but are not limited to physical blending, melt blending, spray applications, letting down a concentrate of a stabilizer (e.g., Vitamin E) in a polyolefin to a desired level, and combinations of two or more thereof. For example, an additive can be diluted in a solvent for simplified addition.

Contacting of the antioxidant package and the polymer can be done under any conditions sufficient to prepare a final composition with an appropriate amount of antioxidant package in the final composition. For ease of use, contacting temperature generally can be between about ambient temperature to about the melting point of the desired polymer. The stabilizer(s), such as, for example, Vitamin C and Vitamin E, can be added to the polymer at room temperature and then the entire composition can be melt blended for more thorough contacting. Contacting pressure generally can be from about atmospheric to about 1,000 psig, and any type of atmosphere can be used, although an inert atmosphere, such as, for example, nitrogen or argon, is preferred in order to increase polymer stability during the addition of the antioxidant package.

The following examples are intended to further illustrate preferred embodiments of this invention without undue limitation of the scope of the invention.

### EXAMPLES

Polyethylene, prepared by conventional, commercially available catalyst systems, sold under the tradename of Marlex® 6007, available from Phillips Petroleum Company, Bartlesville, Oklahoma, was tested for thermal stability using a variety of antioxidants. Commercially available Vitamin E was purchased from Hoffman-LaRoche, Inc., under the trade names of Ronotec® 201 or Ronotec® 202C; Ronotec® 201C is a blend of 10 wt.% Vitamin E and glycerides. Vitamin C is commercially available and was purchased from Hoffman-LaRoche, Inc. as Ronotec® 100. Tetrakis [methylene (3,5-di-tbutyl-4-hydroxyhydrocinnamate)] methane is commercially available and was purchased from Ciba-Geigy as Irganox® 1010.

All oxygen induction time (OIT) analyses were performed in triplicate, unless otherwise indicated. The OIT analyses were performed according to the following procedure. Polymer fluff was slurried with a mixture of Vitamin C and Vitamin E in methylene chloride in order to achieve the desired concentration. The fluff then was extruded and pelletized, as is normally done in a production facility. Individual, stabilized pellets were pressed to a thickness of 8 - 10 mils between two glass slides on a hot plate at 350°F (177°C) for less than 1 minute. One circular sample was punched from each pellet with a 1/4 diameter punch and was placed in an aluminum pan. In an attempt to maintain uniform heat transfer to the sample, the corners of the aluminum pan were crimped and bent to keep all portions of the circular sample in contact with the pan. If heat transfer was not uniform, the OIT analysis results could vary. For example, if the sample was not kept in contact with the pan during heating, the sample could initially curl up and then flatten out as the temperature increased, resulting in a low OIT value. The samples were heated under nitrogen (N₂ fed at a rate of 50cc/min), at a rate of 10°C per minute to 200°C, then switched to pure oxygen (0₂ fed at a rate of 50cc/min). The rate of heat flow (mcal/sec) was measured with time (min) to determine time (min) to onset of oxidative degradation (exothermic reaction).

### Example I

Results of OIT analyses using Vitamin E, Irganox® 1010, and Vitamin E/Vitamin C are presented below in Table 1.

**Table 1**

| Run | Additive | Additive Concentration, mg/kg | OIT #1 | OIT #2 | OIT #3 | OIT, Average |
|---|---|---|---|---|---|---|
| 101 | None | 0 | 1.97 | 1.88 | 1.85 | 1.9±0.06 |
| 102 | Vitamin E* | 100 | 4.55 | 4.18 | 5.27 | 4.7±0.6 |
| 103 | Vitamin E** | 100 | 4.02 | 4.30 | 4.67 | 4.3±0.3 |
| 104 | Irganox® 1010 | 300 | 4.91 | 6.11 | 2.42 | 4.5±1.9 |
| 105 | Vitamin E*/Vitamin C | 100/100 | 11.28 | 6.81 | 12.45 | |
| | | | 5.14 | 7.48 | | 8.6±3.1 |

| | | | | | | |
|---|---|---|---|---|---|---|
| *Ronotec® 201 | | | | | | |
| **Ronotec® 202C | | | | | | |

Data in Table I shows that the OIT is increased significantly by combining Vitamin E and Vitamin C.

### Example II

OITs were again performed on an unstabilized polymer, a polymer with Vitamin E only, a polymer with Vitamin C only, and a polymer with both Vitamin E and Vitamin C added. The data are given below in Table II.

**Table II**

| Run | Additive | Additive Concentration, mg/kg | OIT #1 | OIT #2 | OIT #3 | OIT, Average |
|---|---|---|---|---|---|---|
| 201 | None | 0 | 2.86 | 2.68 | 1.36 | 2.3±0.82 |
| 202 | Vitamin E* | 100 | 2.14 | 1.82 | 2.96 | 2.3±0.59 |
| 203 | Vitamin C | 100 | 1.36 | 0.88 | 1.46 | 1.2±0.31 |
| 204 | Vitamin E*/Vitamin C | 100/100 | 4.57 | 4.71 | 3.60 | 4.3±0.60 |

| | | | | | | |
|---|---|---|---|---|---|---|
| *Ronotec® 201 | | | | | | |

As the data in Table II show, the addition of both Vitamin E and Vitamin C has a synergistic effect on improving the oxygen induction time of a polymer.

It should be noted that the data in Table I and Table II cannot be directly compared due to the fact that only one pellet was used for each analysis and other testing variances, such as, for example, incomplete contact of the pellet with the aluminum pan. However, the data within each Table can be compared. Ideally, in order to achieve a more uniform polymer blend, Vitamin C and Vitamin E would be melt blended with the polymer sample prior to extrusion and pelletization. Unfortunately, such a step adds another heat history to the polymer and can alter the polymer.

While this invention has been described in detail for the purpose of illustration, it is not to be construed as limited thereby but is intended to cover all changes and modifications within the scope and spirit thereof.

## Claims

1. A polymer composition having improved thermal oxidative stability comprising:
a) a polymer selected from homopolymers and copolymers of olefins having 2 to 8 carbon atoms per olefin molecule, particularly wherein said olefin is ethylene;
b) ascorbic acid; and
c) one or more tocopherols.

2. The composition of claim 1, wherein said polymer is selected from homopolymers of ethylene, copolymers of ethylene and higher alpha olefins, preferably having from 3 to 8 carbon atoms per molecule, and mixtures thereof.

3. The composition of claim 1, wherein said polymer is polypropylene.

4. The composition of any of claims 1 to 3, wherein said ascorbic acid is selected from L-ascorbic acid, D-ascorbic acid, and mixtures thereof.

5. The composition of any of the preceding claims, wherein said ascorbic acid is present within a range of 1 to 1000 mg/kg, based on the total weight of the final, resultant polymer composition.

6. The composition of any of the preceding claims, wherein said tocopherol is selected from methyl derivatives of tocol (2-methyl-2-(4',8',12'-trimethyltridecyl)-6-chromonol), methyl derivatives of tocotrienol (2-methyl-2-(4',8',12'-trimethyltrideca-3',7',11'-trienyl)-6-chromonol, and mixtures thereof; in particular wherein said tocopherol is a methyl derivative of tocol (2-methyl-2-(4',8',12'-trimethyltridecyl)-6-chromonol) selected from α-tocopherol (5,7,8-trimethyltocol), β-tocopherol (5,8-dimethyltocol), γ-tocopherol (7,8-dimethyltocol), and δ-tocopherol (8-methyltocol), derivatives of one or more thereof, and mixtures of one or more thereof.

7. The composition of any of the preceding claims, wherein said tocopherol is present within a range of up to 1000 mg/kg, based on the total weight of the final, resultant polymer composition.

8. A process to prepare a polymer composition having improved thermal oxidative stability comprising:
a) melt blending a polymer selected from homopolymers and copolymers of olefins having 2 to 8 carbon atoms per olefin molecule, particularly wherein said olefin is ethylene;
b) ascorbic acid; and
c) one or more tocopherols.

9. The process of claim 8, wherein said polymer is selected from homopolymers of ethylene, copolymers of ethylene and higher alpha olefins, preferably having from 3 to 8 carbon atoms per molecule, and mixtures thereof.

10. The process of claim 8, wherein said polymer is polypropylene.

11. The process of any of claims 8 to 10, wherein said ascorbic acid is selected from L-ascorbic acid, D-ascorbic acid, and mixtures thereof.

12. The process of any of claims 8 to 11, wherein said ascorbic acid is present within a range of 1 to 1000 mg/kg, based on the total weight of the final, resultant polymer composition.

13. The process of any of claims 8 to 12, wherein said tocopherol is selected from methyl derivatives of tocol (2-methyl-2-(4',8',12'-trimethyltridecyl)-6-chromonol), methyl derivatives of tocotrienol (2-methyl-2-(4',8',12'-trimethyltrideca-3',7',11'-trienyl)-6-chromonol, and mixtures thereof; in particular wherein said tocopherol is a methyl derivative of tocol (2-methyl-2-(4',8',12'-trimethyltridecyl)-6-chromonol) selected from α-tocopherol (5,7,8-trimethyltocol), β-tocopherol (5,8-dimethyltocol), γ-tocopherol (7,8-dimethyltocol), and δ-tocopherol (8-methyltocol), derivatives of one or more thereof, and mixtures of one or more thereof.

14. The process of any of claims 8 to 13, wherein said tocopherol is present within a range of up to 1000 mg/kg, based on the total weight of the final, resultant polymer composition.
